(19) Europäisches Patentamt / European Patent Office / Office européen des brevets

(11) **EP 3 066 267 B1**

(12) **EUROPEAN PATENT SPECIFICATION**

(45) Date of publication and mention of the grant of the patent:
**10.10.2018 Bulletin 2018/41**

(21) Application number: **14792841.0**

(22) Date of filing: **03.11.2014**

(51) Int Cl.:
*E02F 9/22* <sup>(2006.01)</sup>      *F02D 29/04* <sup>(2006.01)</sup>

(86) International application number:
**PCT/EP2014/073608**

(87) International publication number:
**WO 2015/067568 (14.05.2015 Gazette 2015/19)**

(54) **WORKING MACHINE**

ARBEITSMASCHINE

ENGIN DE CHANTIER

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.11.2013   JP 2013229269**

(43) Date of publication of application:
**14.09.2016   Bulletin 2016/37**

(73) Proprietor: **Caterpillar SARL**
**1208 Geneva (CH)**

(72) Inventors:
• **TADA, Shogo**
**Tokyo 158-8530 (JP)**

• **OHKUBO, Masafumi**
**Tokyo 158-8530 (JP)**
• **NAKAMOTO, Yozo**
**Tokyo 158-8530 (JP)**

(74) Representative: **BRP Renaud & Partner mbB Rechtsanwälte Patentanwälte Steuerberater**
**Königstraße 28**
**70173 Stuttgart (DE)**

(56) References cited:
**EP-A1- 1 947 316        GB-A- 2 417 793**
**GB-A- 2 467 056        JP-A- H1 088 621**
**JP-A- 2009 074 406      JP-A- 2011 157 931**

**Description**

TECHNICAL FIELD

The present invention relates to a working machine having a traveling hydraulic pressure motor.

BACKGROUND ART

In recent years, energy saving (reduction in fuel consumption) has become an important issue in working machines. Moreover, in excavators, it is requested to suppress an engine rotation speed as low as possible in an idling mode or during an excavation operation (normal operation) in a relatively light load.

Here, merely lowering a rated engine rotation speed itself is not possible when traveling performance needs to be ensured. That is, if the rated engine rotation speed is decreased, a maximum pump flow rate decreases to decrease a traveling speed, and a maximum engine output decreases to decrease traveling ability under power-demanding conditions such as on slope land.

Thus, there is a demand for a controller capable of reducing an engine rotation speed during a normal operation state and securing a traveling speed and traveling power.

From such a viewpoint, as a technique of easily realizing low fuel consumption and low noise during an excavation operation while securing traveling performance, an excavator engine controller in which engine rotation speed control means selects isochronous control when a traveling state is detected and selects droop control when the traveling state is not detected so that an engine rotation speed during an operation is lower than the engine rotation speed (rated engine rotation speed) during traveling is disclosed (see JP 2007-255414 A or EP 1 947 316 A1).

Further, an engine controller is disclosed in which, when the input from travel operation means is detected, a second target rotation speed which is a predetermined target engine rotation speed during traveling is compared with a first target rotation speed which is a minimum engine rotation speed at which a target pump discharge flow rate is realized with maximum pump displacement and the engine rotation speed is controlled by selecting the larger target rotation speed, that is, the smaller engine rotation speed is selected when a machine is not traveling (see JP 2009-074406 A).

Further, as an engine controller capable of controlling driving of an engine efficiently with low fuel consumption, an engine controller which detects an operation state of a lever with pilot pressure, detects the type and combination of hydraulic actuators operated from the operation state, applies a target engine rotation speed (upper limit) set in advance individually according to the type and combination, and sets an upper limit of an engine rotation speed in a travel-only mode so as to be higher than the lower limit of the engine rotation speed is disclosed (see JP 2011-157931 A).

GB 2 417 793 A discloses a working machine having a prime mover control device, comprising an engine control device controlling the output of an engine according to a plurality of working modes set based on the contents of workings and a working mode selector switch for selecting either of the plurality of working modes. When the working mode in which the set rotational speed of the engine is set rather low is selected from the plurality of working modes by the working mode selector switch, the engine control device performs an isochronous control to maintain the rotational speed of the engine constant irrespective of a load variation.

As described above, although techniques of implementing change of an engine rotation speed between during operations and during traveling have been known in the art, the conventional engine controllers cannot deal with power-demanding traveling conditions such as on slope land or during spin-turning.

DISCLOSURE OF THE INVENTION

The present invention has been made in view of such a problem, and an object thereof is to provide a working machine capable of reducing fuel consumption during a normal operation state and securing traveling speed and power under severe traveling conditions.

An invention according to claim 1 is a working machine including: a vehicle body that includes a traveling hydraulic pressure motor and travels using the traveling hydraulic pressure motor; a working unit that includes a working hydraulic pressure actuator and is mounted on the vehicle body operated by the working hydraulic pressure actuator; an engine that is mounted on the vehicle body; a variable displacement hydraulic pressure pump that is driven by the engine so as to supply an operating fluid to the traveling hydraulic pressure motor and the working hydraulic pressure actuator; and a controller that decreases an engine rotation speed to be lower than a rated rotation speed during a normal operation state in a state where the traveling hydraulic pressure motor is stopped, that controls the engine rotation speed so that a pump flow rate is adjusted corresponding to a target traveling speed during a light load state where an engine load generated when operating the traveling hydraulic pressure motor is lower than a threshold, and that controls the engine rotation speed and a pump control output torque so that engine output power is increased from that during the normal operation state and the light load, during a heavy load state where the engine load is higher than the threshold.

An invention according to claim 2 is the working machine according to claim 1, in which the controller has: a normal operation mode where during the normal operation state, a normal operation mode engine rotation speed, which is lower than the rated rotation speed, is selected as an engine rotation speed command value and a normal torque is selected as a target pump control torque; a light load traveling mode where during the light load state, a light load traveling mode engine rotation speed, which is different from the normal operation mode engine rotation speed, is selected as the engine rotation speed command value and the normal torque is selected as the target pump control torque; and a heavy load traveling mode where during the heavy load state, a heavy load traveling mode engine rotation speed, which is higher than the normal operation mode engine rotation speed, is selected as the engine rotation speed command value and a torque increased from the normal torque of the normal operation mode and the light load traveling mode is selected as the target pump control torque.

An invention according to claim 3 is the working machine according to claim 1 or 2, in which the traveling hydraulic pressure motor is provided on each of left and right sides of the vehicle body, a plurality of variable displacement hydraulic pressure pumps are provided so as to correspond to these traveling hydraulic pressure motors and include a pump swash plate as displacement varying means, and the controller maintains a pump swash plate of each hydraulic pressure pump during traveling at a maximum swash angle and variably controls the engine rotation speed.

An invention according to claim 4 is the working machine according to claim 2 or 3, in which the controller has: a first threshold for changing the engine rotation speed from a light load traveling mode engine rotation speed to a heavy load traveling mode engine rotation speed when the engine load during traveling increases; and a second threshold, which is lower than the first threshold, for controlling to return the engine rotation speed from the heavy load traveling mode engine rotation speed to the light load traveling mode engine rotation speed when the engine load decreases.

An invention according to claim 5 is the working machine according to any one of claims 1 to 4, in which the engine load is determined based on at least one measured amounts of a pump load pressure discharged from the hydraulic pressure pump, a traveling load pressure applied to the traveling hydraulic pressure motor, a fuel discharge amount of the engine, and a cylinder internal pressure of the engine, or the fuel discharge amount and the rotation speed of the engine.

According to the invention disclosed in claim 1, in the working machine in which the working unit operated by the working hydraulic pressure actuator is mounted on the vehicle body having the traveling hydraulic pressure motor, the controller decreases the engine rotation speed to be lower than the rated rotation speed during the normal operation state, controls the engine rotation speed so that the pump flow rate is adjusted so as to correspond to the target traveling speed during the light load state, and controls the engine rotation speed and the pump control output torque so that the engine output power is increased from that of during the normal operation state and the light load state during the heavy lead state. Thus, during the normal operation state, it is possible to reduce the fuel consumption by decreasing the engine rotation speed. During the light load state, it is possible to secure a predetermined traveling speed by adjusting the pump flow rate so as to correspond to the target traveling speed. Further, during the heavy load state, the engine rotation speed and the pump control output torque are controlled so that the engine output power is increased from that during the normal operation state and the light load state. Therefore, it is possible to secure the traveling speed and the output power under severe traveling conditions such as during traveling on slope lane or during spin-turning. As a result, it is possible to reduce the fuel consumption during the normal operation state of the working machine and to secure the traveling speed and the output power under severe traveling conditions.

According to the invention disclosed in claim 2, the normal operation mode during the normal operation state where the vehicle stops traveling, the light load traveling mode during the light load state, and the heavy load traveling mode during the heavy load state are selected, and different combinations of the engine rotation speed and the target pump control torque are selected for respective modes. Thus, the control ideal for each mode can be performed easily.

According to the invention disclosed in claim 3, the controller variably controls the engine rotation speed while maintaining the pump swash plates of the plurality of hydraulic pressure pumps provided so as to correspond to the traveling hydraulic pressure motors on both left and right sides of the vehicle body to the maximum swash angle. Thus, it is possible to control the pump flow rates discharged from the respective hydraulic pressure pumps appropriately. Since the pump swash plates of the respective hydraulic pressure pumps are maintained to the maximum swash angle, it is possible to improve the pumping efficiency. Further, since a state where the pump swash plates reach their physical limits is created, a difference between the pump flow rates of two variable displacement pumps occurs rarely, and the ability to travel straight can be secured.

According to the invention disclosed in claim 4, with switching of an engine rotation speed being implemented between the rising period and the falling period of the pump load pressure along a hysteresis curve on the basis of two steps of first and second thresholds, it is possible to prevent oscillatory behavior of the engine rotation speed and to improve stability of control.

According to the invention disclosed in claim 5, it is possible to select an output torque calculated from at least one of the measured amounts that can be detected by sensors provided in an existing working machine among the pump load pressure, the traveling load pressure, the fuel discharge amount of the engine, and the cylinder internal pressure of the engine, or the fuel discharge amount and the rotation speed of the engine that can be detected by sensors provided in an existing working machine and to determine the engine load based on the output torque.

BRIEF DESCRIPTION OF THE DRAWINGS

FIG. 1 is a characteristic diagram of an engine rotation speed and an engine output power, illustrating an embodiment of engine control in a working machine according to the present invention;
FIG. 2 is a flowchart illustrating how the engine control switches modes;
FIG. 3 is a flowchart illustrating how the engine control determines an engine rotation speed command value;
FIG. 4 is a flowchart illustrating how the engine control determines a torque command value;
FIG. 5 is a side view of the working machine; and
FIG. 6 is a block diagram illustrating a configuration example associated with the engine control.

BEST MODE FOR CARRYING OUT THE INVENTION

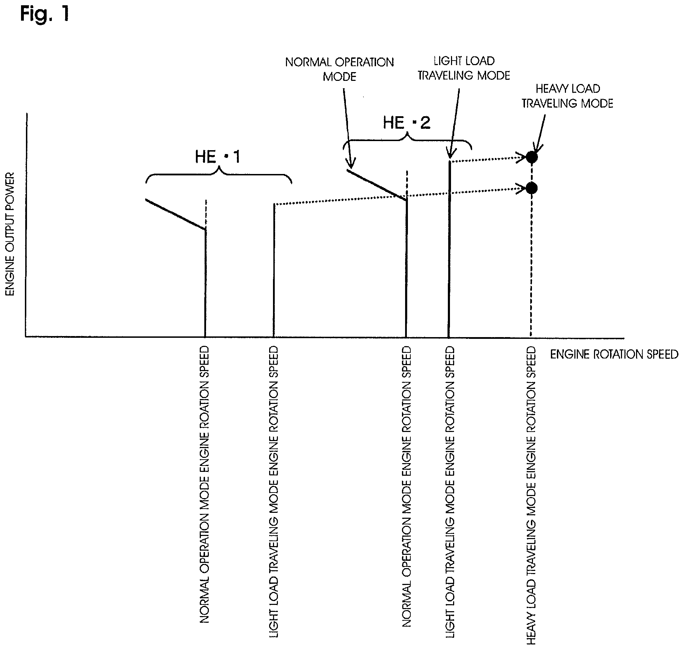

Hereinafter, the present invention will be described in detail according to an embodiment illustrated in FIGS. 1 to 6.

In this embodiment, a case where engine rotation speeds are set such that (normal operation mode engine rotation speed)<(light load traveling mode engine rotation speed)<(heavy load traveling mode engine rotation speed) is described by way of an example. However, the engine rotation speeds are not necessarily set such that the light load traveling mode engine rotation speed is between the normal operation mode engine rotation speed and the heavy load traveling mode engine rotation speed. The engine rotation speeds may be set such that (light load traveling mode engine rotation speed)≦(normal operation mode engine rotation speed)<(heavy load traveling mode engine rotation speed) or that (normal operation mode engine rotation speed)<(heavy load traveling mode engine rotation speed)≦(light load traveling mode engine rotation speed). However, description of these cases is not provided.

Engine rotation speeds may be set such that (normal operation mode engine rotation speed)<(light load traveling mode engine rotation speed) when a pump flow rate is prioritized and that (normal operation mode engine rotation speed)<(heavy load traveling mode engine rotation speed) when engine output power is prioritized.

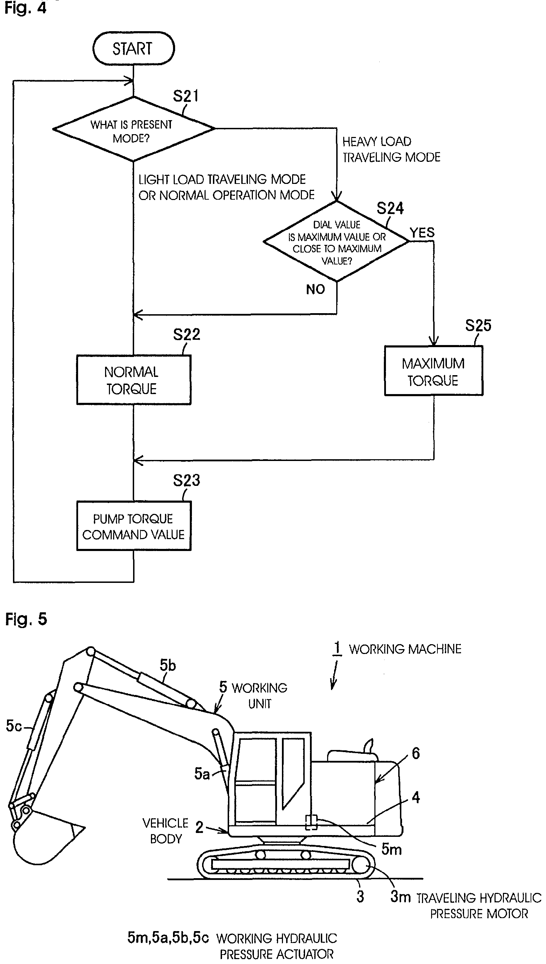

FIG. 5 illustrates an excavator 1 as a working machine, and a vehicle body 2 of the excavator 1 has a configuration in which an upper slewing body 4 is rotatably provided on a lower traveling body 3 movable by traveling hydraulic pressure motors (hereinafter referred to as traveling motors 3m) provided on both left and right sides of the vehicle body 2, and a working unit 5 is mounted on the upper slewing body 4.

An engine and pump unit 6 that supplies operating oil to hydraulic actuators (the traveling motor 3m, a slewing motor 5m, a boom cylinder 5a, a stick cylinder 5b, and a bucket cylinder 5c) that drive the vehicle body 2 and the working unit 5 is mounted on the vehicle body 2. The slewing motor 5m, the boom cylinder 5a, the stick cylinder 5b, and the bucket cylinder 5c are working hydraulic actuators 5m, 5a, 5b, and 5c as working hydraulic pressure actuators.

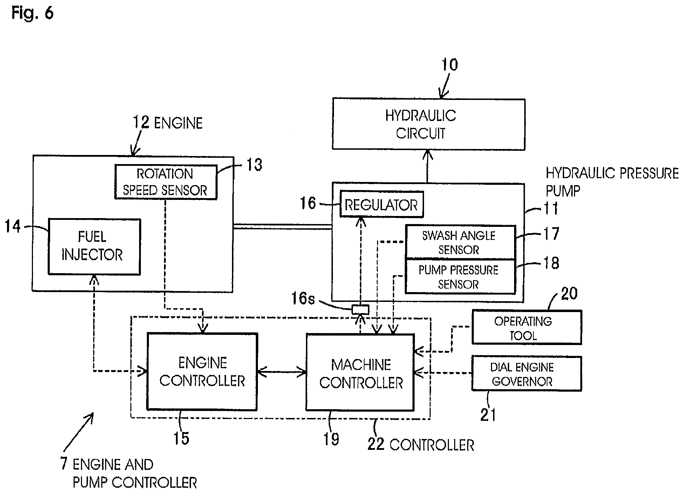

FIG. 6 illustrates a schematic configuration of an engine and pump controller 7 that controls the engine and pump unit 6. The engine and pump controller 7 controls a displacement (swash angle) of a variable displacement hydraulic pressure pump (hereinafter referred to as a variable displacement pump 11) that supplies operating oil as operating fluid to a hydraulic circuit 10 such as a control valve that controls the hydraulic actuators (the traveling motor 3m and the like) and controls an engine rotation speed (engine speed) and engine output power of an engine 12 that drives the variable displacement pump 11. Two variable displacement pumps 11 are provided so as to correspond to the traveling motors 3m on the left and right sides of the vehicle body.

The engine 12 includes a rotation speed sensor 13 that detects an engine rotation speed and a fuel injector 14 that controls fuel injection pressure, a fuel injection point in time (timing), and a fuel injection amount (period). The rotation speed sensor 13 and the fuel injector 14 are connected to an engine controller 15 for fuel injection control. The fuel injector 14 includes an electronic governor or the like for setting engine rotation speeds.

The variable displacement pump 11 includes a pump regulator 16 that includes a pump swash plate as pump displacement varying means and controls a tilt angle (hereinafter referred to as a swash angle) of the pump swash plate indirectly with the aid of an electromagnetic proportional valve 16s or directly without the aid of the electromagnetic proportional valve 16s, a swash angle sensor 17 that detects the swash angle controlled by the pump regulator 16 as a pump displacement control position, and a pump pressure sensor 18 as load pressure detecting means for detecting pump load pressure (that is, pump discharge pressure) used for determination of an engine load. The swash angle sensor 17 and the pump pressure sensor 18 are connected to a machine controller 19.

The pump pressure sensor 18 as the load pressure detector detects working load pressure as pump load pressure during operations in a non-traveling state and detects the larger one of traveling load pressure and working load pressure applied to the traveling motor 3m as the pump load pressure during traveling and provides data used when determining whether a present control mode is a light load traveling mode or a heavy load traveling mode described later. A pressure sensor may detect high-pressure-side pressure on a traveling hydraulic circuit as the traveling load pressure.

Moreover, as parameters for determining an engine load, at least one of the measured amounts such as traveling load pressure applied to the traveling motor 3m (when working load pressure is small only), a fuel discharge amount of the engine 12, and cylinder internal pressure of the engine 12 or an output torque calculated from the fuel discharge amount and the rotation speed of the engine 12 in addition to the pump load pressure discharged from the variable displacement pump 11 may be used. These parameters are measured amounts that can be detected by the sensors provided in an existing working machine or state amounts (the output torque) that can be calculated from the measured amounts detected by the sensors provided in a working machine. The engine load can be determined based on the measured amounts or state amounts.

A lever or pedal-type operating tool 20 operated by an operator of the excavator 1 and a dial engine governor (dial accelerator) 21 as engine rotation speed setting means are connected to the machine controller 19.

The operating tool 20 is a joystick or a remote control valve. A joystick-type operating tool controls a control valve of the hydraulic circuit 10 according to an operation amount indirectly with the aid of an electromagnetic proportional valve according to pilot control, and a remote control valve-type operating tool directly controls the control valve of the hydraulic circuit 10 according to the operation amount. The operation amounts (including the presence of operations) of various hydraulic actuators are converted into electrical signals and are input to the machine controller 19.

The dial engine governor 21 has multi-step dial values and can select a predetermined engine rotation speed for each dial value, which includes a normal operation mode engine rotation speed, a light load traveling mode engine rotation speed, a heavy load traveling mode engine rotation speed, and the like described later.

The engine controller 15 and the machine controller 19 are connected and exchange information with each other. The engine controller 15 and machine controller 19 will be referred to as a controller 22.

The controller 22 has a normal operation mode during a normal operation state, a light load traveling mode during a light load state, and a heavy load traveling mode during a heavy load state.

In the normal operation mode, a normal operation mode engine rotation speed lower than a rated rotation speed is selected as an engine rotation speed command value, and a normal torque is selected as a target pump control torque.

In the light load traveling mode, a light load traveling mode engine rotation speed different from the normal operation mode engine rotation speed is selected as the engine rotation speed command value, and a normal torque is selected as the target pump control torque.

In the heavy load traveling mode, a heavy load traveling mode engine rotation speed higher (or different from the normal operation mode engine rotation speed and the light load traveling mode engine rotation speed) than the normal operation mode engine rotation speed is selected as the engine rotation speed command value, and a torque increased from the normal torque in the normal operation mode and the light load traveling mode is selected as the target pump control torque.

The engine and pump controller 7 has a function of controlling the engine rotation speed and output power of the engine 12 with the aid of the engine controller 15 and the fuel injector 14 based on an engine rotation speed command value and a torque command value determined based on a travel operation state of the operating tool 20, the dial value of the dial engine governor 21, and the pump load pressure state detected by the pump pressure sensor 18, adjusting the pump regulator 16 of the variable displacement pump 11 with the aid of an electromagnetic proportional valve (not illustrated) according to an electrical signal output from the machine controller 19, and controlling the output and the upper limit output of the variable displacement pump 11.

FIG. 1 is a characteristic diagram illustrating an engine rotation speed and engine output power associated with control of reducing the fuel consumption during the normal operation state in a state (non-traveling state) where the traveling motor 3m is stopped and securing a traveling speed and maximum output power in a traveling state.

In the example illustrated in FIG. 1, HE-1 indicates the characteristics of an excavator having relatively low output power, HE-2 indicates the characteristics of an excavator having relatively high output power, and in both excavators, a normal operation mode engine rotation speed during the normal operation state is lower than their rated rotation speed. That is, in order to reduce fuel consumption, the engine rotation speed is suppressed as low as possible. When the engine rotation speed is decreased to the normal operation mode engine rotation speed, the maximum flow rate of the variable displacement pump 11 and the maximum output power of the engine are decreased, which results in reduction in fuel consumption.

Moreover, during a light load state, for example, when the traveling motor 3m is operated so that the vehicle body 2 travels straight on a flat ground, the engine rotation speed is controlled such that the pump flow rate is adjusted so as to correspond to a target traveling speed. That is, isochronous control is performed so that the engine rotation speed is increased to a light load traveling mode engine rotation speed in order to secure the traveling speed and the rotation speed is maintained (first step).

In this case, when the engine rotation speed is variably controlled to an appropriate value while maintaining the pump swash plates of the two variable displacement pumps 11 provided so as to correspond to the traveling motors 3m on both left and right sides of the vehicle body 2 to their maximum swash angle, the pump flow rates discharged from the variable displacement pumps 11 can be controlled appropriately. Moreover, when the pump swash plates of the variable displacement pumps 11 are maintained to their maximum swash angles, pumping efficiency can be improved. Further, since a state where the pump swash plates reach their physical limits is created, a difference between the pump flow rates of two variable displacement pumps occurs rarely, and the ability to travel straight can be secured.

Further, during a heavy load state where more power than during the light load state is demanded, both an engine rotation speed and a pump control output torque are controlled so that engine output power is maximized. That is, when a travel load increases, the engine rotation speed is changed to a heavy load traveling mode engine rotation speed (second step) in order to increase the upper limit engine output power and the upper limit pump control output power is changed.

In this case, the engine rotation speed is controlled so that the engine rotation speed changes along a hysteresis curve rather than along an oscillatory curve such that the engine rotation speed is changed from the first step to the second step if the pump load pressure during traveling exceeds a first threshold A and the engine rotation speed returns from the second step to the first step if the pump load pressure is lower than a second threshold B, which is lower than the first threshold A.

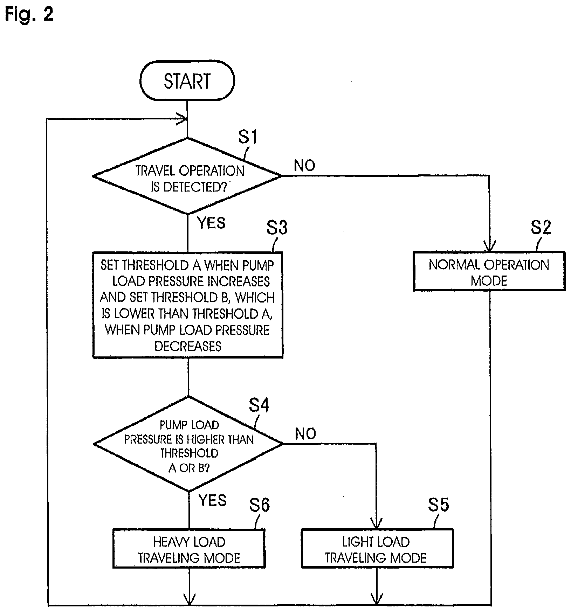

FIG. 2 is a flowchart illustrating how the controller 22 switches modes, which will be described below.

(Step S1)

It is determined whether a travel operation is detected. The travel operation may be detected by a pressure switch or a pressure sensor detecting a travel pilot pressure of operating a travel control valve or may be detected by a mechanical switch directly detecting the input of a travel lever.

(Step S2)

When the travel operation is not detected, it is determined that the present control mode is a normal operation mode.

(Step S3)

When the travel operation is detected, the pump load pressure detected by the pump pressure sensor 18 is detected. In the case of a travel-only operation, a traveling load pressure detected by a pressure sensor provided in a traveling hydraulic circuit may be used.

When the travel operation is performed, although the present control mode is changed from the normal operation mode to the traveling mode, since two traveling modes of a light load traveling mode and a heavy load traveling mode are present depending on the pump load pressure, a threshold for distinguishing the two modes is determined. In this case, since a system becomes unstable if the measured pump load pressure fluctuates frequently across a threshold, the first and second thresholds A and B having hysteresis characteristics are set.

That is, the controller 22 has the first threshold A at which the engine rotation speed is modified from the light load traveling mode engine rotation speed to the heavy load traveling mode engine rotation speed when the pump load pressure during traveling increases and the second threshold B at which the engine rotation speed is decreased from the heavy load traveling mode engine rotation speed to the light load traveling mode engine rotation speed when the pump load pressure decreases. The controller 22 uses the first threshold A when the pump load pressure increases and uses the second threshold B, which is lower than the first threshold A, when the pump load pressure decreases. In this way, the engine rotation speeds in the rising period and the falling period of the pump load pressure are switched along a hysteresis curve using the two steps of first and second thresholds A and B. Thus, it is possible to prevent oscillatory behavior of the engine rotation speed and to improve stability of control. These thresholds A and B are parameters that can be adjusted depending on model.

(Step S4)

It is determined whether an average pump load pressure detected by the pump pressure sensor 18 and the like is higher than the threshold A or B. That is, it is determined whether the increasing pump load pressure is higher than the first threshold A and whether the decreasing pump load pressure is higher than the second threshold B.

(Step S5)

When the pump load pressure is lower than the threshold A or B, it is determined that the present control mode is a light load traveling mode. That is, when the increasing pump load pressure is lower than the first threshold A or the decreasing pump load pressure is lower than the second threshold B, it is determined that the present control mode is a light load traveling mode.

(Step S6)

When the pump load pressure is higher than the threshold A or B, it is determined that the present control mode is a heavy load traveling mode. That is, when the increasing pump load pressure is higher than the first threshold A or the decreasing pump load pressure is higher than the second threshold B, it is determined that the present control mode is a heavy load traveling mode.

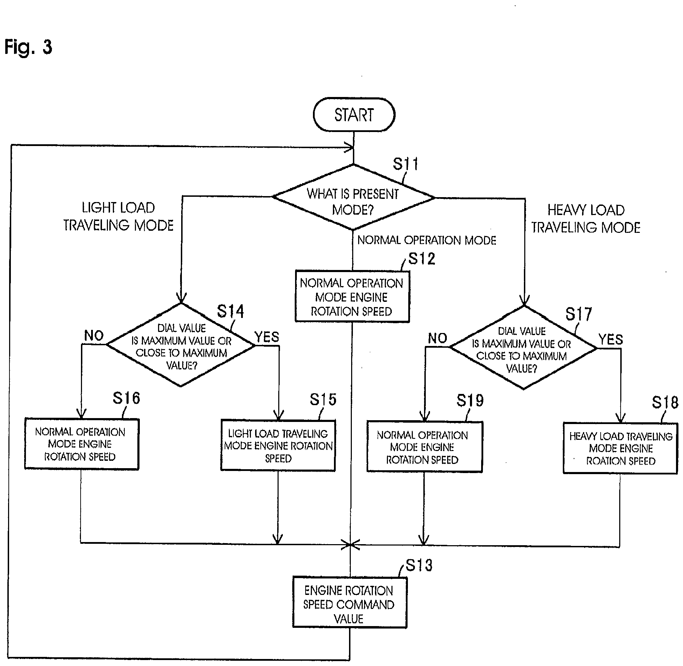

FIG. 3 is a flowchart illustrating how the controller 22 determines an engine rotation speed command value, which will be described below.

An optimal traveling engine rotation speed command value for each of the normal operation mode, the light load traveling mode, and the heavy load traveling mode is provided, and the command value is set as a parameter of each model.

(Step S11)

It is determined whether the present control mode is a normal operation mode, a light load traveling mode, or a heavy load traveling mode.

(Step S12)

When the present control mode is a normal operation mode, the normal operation mode engine rotation speed is determined.

(Step S13)

In the case of step S12, the normal operation mode engine rotation speed is output from the machine controller 19 to the engine controller 15 as an engine rotation speed command value.

(Step S14)

When it is determined in step S11 that the present control mode is a light load traveling mode, it is determined whether the dial value of the dial engine governor 21 is the maximum value or a value close to the maximum value, or is lower than these values.

(Step S15)

When it is determined in step S14 that the dial value of the dial engine governor 21 is the maximum value (for example, "10") or a value (for example, "9" or "8") close to the maximum value, the light load traveling mode engine rotation speed is determined as the engine rotation speed command value and is output from the machine controller 19 to the engine controller 15. It is assumed that the light load traveling mode engine rotation speed is a value which realizes a target traveling speed.

The light load traveling mode engine rotation speed command value is calculated according to the following equation.

(Target traveling motor rotation speed)×(Traveling motor displacement)=(Traveling flow rate)

(Traveling flow rate)/(Pump flow rate)=(Pump rotation speed)

(Pump rotation speed)/(Engine-pump reduction ratio)=(Engine rotation speed)

(Step S16)

When it is determined in step S14 that the dial value of the dial engine governor 21 is not the maximum value or a value close to the maximum value, mode switching is implemented and then the normal operation mode engine rotation speed is determined as the engine rotation speed command value and is output from the machine controller 19 to the engine controller 15. During the mode switching, a delay circuit or a ramp function for smoothing the control may be used.

(Step S17)

When it is determined in step S11 that the present control mode is a heavy load traveling mode, it is determined whether the dial value of the dial engine governor 21 is the maximum value or a value close to the maximum value, or is lower than these values.
The dial value of the dial engine governor 21 is set such that the "light load traveling mode engine rotation speed" is set as the command value when the dial value is equal to or larger than a predetermined dial value only and the "normal operation mode engine rotation speed" is set as the command value when the dial value is smaller than the predetermined dial value.

(Step S18)

When it is determined in step S17 that the dial value of the dial engine governor 21 is the maximum value (for example, "10") or a value (for example, "9" or "8") close to the maximum value, the heavy load traveling mode engine rotation speed is determined as the engine rotation speed command value and is output from the machine controller 19 to the engine controller 15. It is assumed that the heavy load traveling mode engine rotation speed is a value which can use the maximum output power (=(Torque)×(Rotation speed)) on an engine torque curve.

(Step S19)

When it is determined in step S17 that the dial value of the dial engine governor 21 is not the maximum value or a value close to the maximum value, mode switching is implemented and then the normal operation mode engine rotation speed is determined as the engine rotation speed command value and is output from the machine controller 19 to the engine controller 15.
In steps S15 and S16 and steps S18 and S19, when switching the rotation speed command values, a delay circuit or a ramp function for smoothing the control may be used.
Although in steps S14 and S17 of selecting the conditions for the engine rotation speed command value, illustrated in FIG. 3, a case where the dial value of the dial engine governor 21 is set to the maximum value or a value close to the maximum value is distinguished from a case where the dial value is set to a value smaller than these values, such conditional determination may not be performed.
For example, when it is determined in step S11 that the present control mode is the light load traveling mode, the light load traveling mode engine rotation speed only may be determined as the engine rotation speed command value. Moreover, when it is determined in step S11 that the present control mode is the heavy load traveling mode, the heavy load traveling mode engine rotation speed only may be determined as the engine rotation speed command value.
FIG. 4 is a flowchart illustrating how the controller 22 determines a torque command value, which will be described below.

(Step S21)

It is determined whether the present control mode is a normal operation mode or a light load traveling mode,

or a heavy load traveling mode.

(Step S22)

When the present control mode is the normal operation mode or the light load traveling mode, a target pump control torque is determined as a normal torque.

(Step S23)

In the case of step S22, the normal torque is output as a pump torque command value.

(Step S24)

It is determined whether the dial value of the dial engine governor 21 is a maximum value or a value close to the maximum value. When the dial value is smaller than the maximum value or the value close to the maximum value, the heavy load traveling mode is switched to the light load traveling mode or the normal operation mode. During the mode switching, a delay circuit or a ramp function for smoothing the control may be used.

(Step S25)

When the dial value of the dial engine governor 21 is equal to or larger than the maximum value or the value close to the maximum value, a maximum torque is used as a pump torque command value. In short, during the heavy load traveling mode, a target pump control torque is maximized. The maximum torque is set as a parameter of each model.
In step S24, the target pump control torque value may be determined as the maximum torque only when the dial value of the dial engine governor 21 is set to the maximum value "10", and the torque may be switched to the normal torque when the dial value is "9" or smaller. Alternatively, the maximum torque may be determined as the pump torque command value when the dial value is the value "9" close to the maximum value or is "8" or larger, and the torque may be switched to the normal torque when the dial value is smaller than "8" or "7".
Although in steps S24, a case where the dial value of the dial engine governor 21 is set to the maximum value ("10") or a value ("9" or "8") close to the maximum value is distinguished from a case where the dial value is set to a value smaller than these values, such conditional determination of step S24 may not be performed.
For example, when it is determined in step S21 that the present control mode is the heavy load traveling mode, the maximum torque only may be determined as the torque command value.
Next, how the engine rotation speed and torque are controlled in the following three modes depending on an operation state of the excavator will be described.

(1) During Normal Operation (Normal Operation Mode)

Mode switching condition: A state where no travel operation is performed is created (see FIG. 2).
Engine rotation speed: The "normal operation mode engine rotation speed" lower than the rated rotation speed is selected as the engine rotation speed command value (see FIG. 3) .
Torque: The "normal torque" lower than the maximum value is selected as the target pump control torque (see FIG. 4). Actually, the engine output power is controlled by controlling the pump torque.

(2) During Light Load (Light Load Traveling Mode)

Mode switching condition: A state where a travel operation is performed is detected and the pump load pressure is lower than the second threshold B (see FIG. 2). Although the pump pressure detected by the pump pressure sensor 18 is used as the pump load pressure, the motor pressure detected by a pressure sensor as another pump load detecting means for detecting the high-pressure-side pressure on a traveling motor circuit may be used.
Engine rotation speed: The "light load traveling mode engine rotation speed" higher than the "normal operation mode engine rotation speed" and lower than "heavy load traveling mode engine rotation speed" is selected as the command value (see FIG. 3). It is assumed that the light load traveling mode engine rotation speed is a value which can realize the target traveling speed (specification value). The maximum speed during the travel operation is always the target traveling speed (specification value).
The dial value of the dial engine governor 21 may be set such that the "light load traveling mode engine rotation speed" is set as the command value when the dial value is equal to or larger than a predetermined dial value only and the "normal operation mode engine rotation speed" defined in (1) is set as the command value when the dial value is smaller than the predetermined dial value (see FIG. 3).

Torque: The "normal torque" lower than the maximum value is selected as the target pump control torque (see FIG. 4).

(3) During Heavy Load (Heavy Load Traveling Mode)

Mode switching condition: A state where a travel operation is performed is detected and the pump load pressure is higher than the first threshold A (see FIG. 2).

Engine rotation speed: The "heavy load traveling mode engine rotation speed" higher than the "normal operation mode engine rotation speed" and the "light load traveling mode engine rotation speed" is selected as the command value (see FIG. 3). The heavy load traveling mode engine rotation speed is a rotation speed value at which the maximum output power on an engine torque curve is obtained.

The dial value of the dial engine governor 21 may be set such that the "heavy load traveling mode engine rotation speed" is set as the command value when the dial value is equal to or larger than a predetermined dial value only and the "normal operation mode engine rotation speed" defined in (1) is set as the command value when the dial value is smaller than the predetermined dial value (see FIG. 3).

Torque: The "maximum torque" is selected as the target pump control torque (see FIG. 4). A value unique to each model is set as the target torque.

The dial value of the dial engine governor 21 may be set such that the target torque is set to the maximum value when the dial value is equal to or larger than a predetermined dial value only and the normal torque defined in (1) is set as the command value when the dial value is smaller than the predetermined dial value (see FIG. 4).

Here, if only one threshold is used rather than using different thresholds A and B, when the pump load pressure is near the threshold, the control mode may switch continuously between the two modes (2) and (3) in a short period of time and the engine rotation speed may fluctuate and exhibit oscillatory behavior. In order to prevent this, the threshold of the pump load pressure has hysteresis characteristics such that the first threshold A associated with the pump load pressure when the control mode switches from the mode (2) to the mode (3) and the second threshold B associated with the pump load pressure when the control mode switches from the mode (3) to the mode (2) is set to be lower than the first threshold A.

As described above, in the excavator 1 in which the working unit 5 operated by the working hydraulic actuators 5m, 5a, 5b, and 5c is mounted on the vehicle body 2 having the traveling motor 3m, the controller 22 decreases the engine rotation speed to be lower than the rated rotation speed during the normal operation state, controls the engine rotation speed so that the pump flow rate is adjusted so as to correspond to the target traveling speed during the light load state, and controls the engine rotation speed and the pump control output torque so that the engine output power is maximized during the heavy load state. Thus, during the normal operation state, it is possible to reduce the fuel consumption by decreasing the engine rotation speed. During the light load state, it is possible to secure a predetermined traveling speed by adjusting the pump flow rate so as to correspond to the target traveling speed. Further, in the heavy load, the engine output power is maximized by controlling the engine rotation speed and the pump control output torque. Therefore, it is possible to secure the traveling speed and the output power under severe traveling conditions such as during traveling on slope lane or during spin-turning. As a result, it is possible to reduce the fuel consumption during the normal operation state of the excavator 1 and to secure the traveling speed and the output power under severe traveling conditions.

Moreover, the normal operation mode during the normal operation state where the vehicle stops traveling, the light load traveling mode during the light load state, and the heavy load traveling mode during the heavy load state are selected depending on the operation state of the excavator 1, and different combinations of the engine rotation speed and the target pump control torque are selected for respective modes to control the engine rotation speed and the torque. Therefore, the control ideal for each mode can be performed easily, and it is possible to reduce the fuel consumption during the normal operation state and to secure the traveling performance.

INDUSTRIAL APPLICABILITY

The present invention is industrially applicable to business operators associated with manufacturing and selling working machines.

EXPLANATION OF REFERENCE NUMERALS

1: Excavator as working machine

2: Vehicle body
3m: Traveling hydraulic pressure motor (Traveling motor)
5: Working unit
5m, 5a, 5b, 5c: Working hydraulic actuator as working hydraulic pressure actuator
11: Hydraulic pressure pump (Variable displacement pump)
12: Engine
22: Controller

## Claims

1. A working machine (1) comprising:

   a vehicle body (2) that includes a traveling hydraulic pressure motor (3m) and travels using the traveling hydraulic pressure motor (3m);
   a working unit (5) that includes a working hydraulic pressure actuator (5a, 5b, 5c, 5m) and is mounted on the vehicle body (2) and operated by the working hydraulic pressure actuator (5a, 5b, 5c, 5m);
   an engine (12) that is mounted on the vehicle body (2);
   a variable displacement hydraulic pressure pump (11) that is driven by the engine (12) so as to supply an operating fluid to the traveling hydraulic pressure motor (3m) and the working hydraulic pressure actuator (5a, 5b, 5c, 5m); and
   a controller (7, 15, 19 22) that decreases an engine rotation speed to be lower than a rated rotation speed during a normal operation state in a state where the traveling hydraulic pressure motor (3m) is stopped,
   **characterized in that**
   the controller (7, 15, 19, 22) controls the engine rotation speed so that a pump flow rate is adjusted corresponding to a target traveling speed during a light load state where an engine load generated when operating the traveling hydraulic pressure motor (3m) is lower than a threshold, and
   the controller (7, 15, 19, 22) controls the engine rotation speed and a pump control output torque so that engine output power is increased from that during the normal operation state and the light load, during a heavy load state where the engine load is higher than the threshold.

2. The working machine according to claim 1, wherein
   the controller (7, 15, 19, 22) has:

   a normal operation mode where during the normal operation state, a normal operation mode engine rotation speed, which is lower than the rated rotation speed, is selected as an engine rotation speed command value and a normal torque is selected as a target pump control torque;
   a light load traveling mode where during the light load state, a light load traveling mode engine rotation speed, which is different from the normal operation mode engine rotation speed, is selected as the engine rotation speed command value and the normal torque is selected as the target pump control torque; and
   a heavy load traveling mode where during the heavy load state, a heavy load traveling mode engine rotation speed, which is higher than the normal operation mode engine rotation speed, is selected as the engine rotation speed command value and a torque increased from the normal torque of the normal operation mode and the light load traveling mode is selected as the target pump control torque.

3. The working machine according to claim 1 or 2, wherein
   the traveling hydraulic pressure motor (3m) is provided on each of left and right sides of the vehicle body (2),
   a plurality of variable displacement hydraulic pressure pumps are provided so as to correspond to these traveling hydraulic pressure motors and include a pump swash plate as displacement varying means, and
   the controller (7, 15, 19, 22) maintains a pump swash plate of each hydraulic pressure pump during traveling at a maximum swash angle and variably controls the engine rotation speed.

4. The working machine according to claim 2 or 3, wherein the controller (7, 15, 19, 22) has:

   a first threshold for changing the engine rotation speed from a light load traveling mode engine rotation speed to a heavy load traveling mode engine rotation speed when the engine load during traveling increases; and
   a second threshold, which is lower than the first threshold, for controlling to return the engine rotation speed from the heavy load traveling mode engine rotation speed to the light load traveling mode engine rotation speed when the engine load decreases.

5. The working machine according to any one of claims 1 to 4, wherein
the engine load is determined based on at least one of measured amounts of a pump load pressure discharged from the hydraulic pressure pump (11), a traveling load pressure applied to the traveling hydraulic pressure motor (3m), a fuel discharge amount of the engine (12), and a cylinder internal pressure of the engine (11), or the fuel discharge amount and the rotation speed of the engine (11).

**Patentansprüche**

1. Arbeitsmaschine (1), umfassend:

   eine Fahrzeugkarosserie (2), die einen mitbewegten hydraulischen Druckmotor (3m) beinhaltet und sich unter Verwendung des mitbewegten hydraulischen Druckmotors (3m) bewegt;
   eine Arbeitseinheit (5), die einen arbeitenden hydraulischen Druckaktuator (5a, 5b, 5c, 5m) beinhaltet und an der Fahrzeugkarosserie (2) montiert ist und von dem arbeitenden hydraulischen Druckaktuator (5a, 5b, 5c, 5m) betrieben wird;
   einen Motor (12), der an der Fahrzeugkarosserie (2) montiert ist;
   eine hydraulische Druckpumpe zur variablen Verschiebung (11), die von dem Motor (12) angetrieben wird, um den mitbewegten hydraulischen Druckmotor (3m) und den arbeitenden hydraulischen Druckaktuator (5a, 5b, 5c, 5m) mit einem Arbeitsfluid zu versorgen; und
   einen Regler (7, 15, 19 22), der eine Motordrehgeschwindigkeit verringert, so dass diese geringer ist als eine bewertete Motordrehgeschwindigkeit während eines normalen Betriebszustands, in einem Zustand, in dem der mitbewegte hydraulische Druckmotor (3m) angehalten ist,
   **dadurch gekennzeichnet, dass**
   der Regler (7, 15, 19, 22) die Motordrehgeschwindigkeit derart regelt, dass eine Pumpenströmungsrate entsprechend einer Zielbewegungsgeschwindigkeit angepasst wird, während eines geringen Lastzustands, in dem eine beim Betrieb des mitbewegten hydraulischen Druckmotors (3m) erzeugten Motorlast geringer ist als ein Schwellwert, und
   der Regler (7, 15, 19, 22) die Motordrehgeschwindigkeit und ein Pumpenregelungsausgangsdrehmoment derart regelt, dass eine Motorausgangsleistung von derjenigen während des normalen Betriebszustands und der geringen Last erhöht ist, während eines hohen Lastzustands, in dem die Motorlast höher ist als der Schwellwert.

2. Arbeitsmaschine nach Anspruch 1, wobei der Regler (7, 15, 19, 22) aufweist:

   einen normalen Betriebsmodus, wobei während des normalen Betriebsmodus eine Motordrehgeschwindigkeit des normalen Betriebsmodus, die geringer ist als die bewertete Motordrehgeschwindigkeit, als ein Befehlswert der Motordrehgeschwindigkeit ausgewählt ist, und ein normales Drehmoment als ein Zielpumpenregelungsdrehmoment ausgewählt ist;
   einen Bewegungsmodus für geringe Last, wobei während des geringen Lastzustands eine Motordrehgeschwindigkeit des Bewegungsmodus für geringe Last, die sich von der Motordrehgeschwindigkeit des normalen Betriebsmodus unterscheidet, als der Befehlswert der Motordrehgeschwindigkeit ausgewählt ist, und das normale Drehmoment als das Zielpumpenregelungsdrehmoment ausgewählt ist; und
   einen Bewegungsmodus für hohe Last, wobei während des hohen Lastzustands eine Motordrehgeschwindigkeit des Bewegungsmodus für hohe Last, die höher ist als die Motordrehgeschwindigkeit des normalen Betriebsmodus, als der Befehlswert der Motordrehgeschwindigkeit ausgewählt ist, und ein von dem normalen Drehmoment des normalen Betriebsmodus und des Bewegungsmodus für geringe Last erhöhtes Drehmoment als das Zielpumpenregelungsdrehmoment ausgewählt ist.

3. Arbeitsmaschine nach Anspruch 1 oder 2, wobei
   der mitbewegte hydraulische Druckmotor (3m) auf jeder von linken und rechten Seiten der Fahrzeugkarosserie (2) bereitgestellt ist,
   eine Mehrzahl von hydraulischen Druckpumpen zur variablen Verschiebung derart bereitgestellt sind, dass sie diesen mitbewegten hydraulischen Druckmotoren entsprechen, und eine Pumpenschrägscheibe als Verschiebungsvariationsmittel beinhalten, und
   der Regler (7, 15, 19, 22) eine Pumpenschrägscheibe jeder hydraulischen Druckpumpe während der Bewegung an einem maximalen Schrägwinkel hält und variabel die Motordrehgeschwindigkeit regelt.

**4.** Arbeitsmaschine nach Anspruch 2 oder 3, wobei der Regler (7, 15, 19, 22) aufweist:

einen ersten Schwellwert zum Verändern der Motordrehgeschwindigkeit von einer Motordrehgeschwindigkeit des Bewegungsmodus für geringe Last zu einer Motordrehgeschwindigkeit des Bewegungsmodus für hohe Last, wenn die Motorlast während der Bewegung steigt; und
einen zweiten Schwellwert, der geringer ist als der erste Schwellwert, um zu regeln, dass die Motordrehgeschwindigkeit von der Motordrehgeschwindigkeit des Bewegungsmodus für hohe Last zu der Motordrehgeschwindigkeit des Bewegungsmodus für geringe Last zurück gestellt wird, wenn die Motorlast sinkt.

**5.** Arbeitsmaschine nach einem der Ansprüche 1 bis 4, wobei
die Motorlast auf Grundlage von mindestens einem von gemessenen Mengen eines Pumpenlastdrucks, der von der hydraulischen Druckpumpe (11) abgegeben wird, einem Bewegungslastdruck, der auf den mitbewegten hydraulischen Druckmotor (3m) aufgeprägt wird, einer Kraftstoffabgabemenge des Motors (12) und einem Zylinderinnendruck des Motors (11), oder der Kraftstoffabgabemenge und der Drehgeschwindigkeit des Motors (11) bestimmt wird.

## Revendications

**1.** Machine de travaux (1) comprenant :

un châssis de véhicule (2) qui inclut un moteur à pression hydraulique de déplacement (3m) et qui se déplace à l'aide du moteur à pression hydraulique de déplacement (3m) ;
une unité de travail (5) qui comprend un actionneur à pression hydraulique de travail (5a, 5b, 5c, 5m) et est montée sur le châssis de véhicule (2) et actionnée par l'actionneur à pression hydraulique de travail (5a, 5b, 5c, 5m) ;
un moteur (12) monté sur le châssis de véhicule (2) ;
une pompe à pression hydraulique à cylindrée variable (11) entraînée par le moteur (12) de façon à alimenter en fluide de fonctionnement le moteur à pression hydraulique de déplacement (3m) et l'actionneur à pression hydraulique de travail (5a, 5b, 5c, 5m) ; et
un dispositif de commande (7, 15, 19 22) qui réduit la vitesse de rotation du moteur pour qu'elle soit inférieure à une vitesse de rotation nominale pendant un fonctionnement normal dans un état où le moteur à pression hydraulique de déplacement (3m) est arrêté,
**caractérisé en ce que**
le dispositif de commande (7, 15, 19, 22) commande la vitesse de rotation du moteur de sorte qu'un débit de pompe est ajusté correspondant à une vitesse de déplacement cible pendant un état de charge légère où une charge de moteur générée lors du fonctionnement du moteur à pression hydraulique de déplacement (3m) est inférieur à un seuil, et
le dispositif de commande (7, 15, 19, 22) commande la vitesse de rotation du moteur et un couple de sortie de commande de pompe de sorte que la puissance de sortie du moteur est augmentée par rapport à celle pendant l'état de fonctionnement normal et la charge légère pendant un état de charge lourde dans lequel la charge du moteur est supérieure au seuil.

**2.** Machine de travaux selon la revendication 1, dans laquelle le dispositif de commande (7, 15, 19, 22) a :

un mode de fonctionnement normal où pendant l'état de fonctionnement normal, une vitesse de rotation de moteur en mode de fonctionnement normal, qui est inférieure à la vitesse de rotation nominale, est sélectionnée comme valeur de commande de vitesse de rotation du moteur et un couple normal est sélectionné comme couple de commande de pompe cible ;
un mode de déplacement de charge légère où pendant l'état de charge légère, une vitesse de rotation de moteur en mode de déplacement de charge légère, qui est différente du mode de fonctionnement normal du moteur, est sélectionnée comme valeur de commande de vitesse de rotation de moteur et le couple normal est sélectionné comme le couple de commande de pompe cible ; et
un mode de déplacement de charge lourde où pendant l'état de charge lourde, une vitesse de rotation de moteur en mode déplacement de charge lourde, qui est supérieure à la vitesse de rotation de moteur en mode de fonctionnement normal, est sélectionnée comme valeur de commande de vitesse de rotation de moteur et un couple augmenté à partir du couple normal du mode de fonctionnement normal et du mode de déplacement de charge légère est sélectionné comme couple de commande de la pompe cible.

**3.** Machine de travaux selon la revendication 1 ou 2, dans laquelle le moteur à pression hydraulique de déplacement (3m) est prévu sur chacun des côtés gauche et droit du châssis de véhicule (2),

une pluralité de pompes à pression hydraulique à cylindrée variable sont ménagées de manière à correspondre à ces moteurs à pression hydraulique de déplacement et comprennent un plateau oscillant de pompe en tant que moyen de variation de déplacement, et

le dispositif de commande (7, 15, 19, 22) maintient un plateau oscillant de pompe de chaque pompe à pression hydraulique pendant le déplacement à un angle d'oscillation maximal et commande de manière variable la vitesse de rotation du moteur.

**4.** Machine de travaux selon les revendications 2 ou 3, dans laquelle le dispositif de commande (7, 15, 19, 22) a :

un premier seuil pour changer la vitesse de rotation de moteur d'une vitesse de rotation de moteur en mode de déplacement de charge légère à une vitesse de rotation du moteur en mode de déplacement de charge lourde lorsque la charge du moteur augmente pendant le déplacement ; et

un second seuil, qui est inférieur au premier seuil, pour commander le retour de la vitesse de rotation de moteur de la vitesse de rotation de moteur en mode déplacement de charge lourde à la vitesse de rotation de moteur en mode déplacement de charge légère lorsque la charge de moteur diminue.

**5.** Machine de travaux selon l'une quelconque des revendications 1 à 4,
dans lequel la charge de moteur est déterminée sur la base d'au moins une quantité mesurée parmi une quantité de pression de charge de pompe déchargée par la pompe à pression hydraulique (11), une quantité de pression de charge de déplacement appliquée au moteur à pression hydraulique de déplacement (3m), une quantité de décharge de carburant du moteur (12) et une quantité de pression interne du cylindre du moteur (11), ou la quantité de décharge de carburant et la vitesse de rotation du moteur (11).

# Fig. 1

NORMAL OPERATION MODE

LIGHT LOAD TRAVELING MODE

HEAVY LOAD TRAVELING MODE

HE·2

HE·1

ENGINE OUTPUT POWER

ENGINE ROTATION SPEED

NORMAL OPERATION MODE ENGINE ROATION SPEED

LIGHT LOAD TRAVELING MODE ENGINE ROTATION SPEED

NORMAL OPERATION MODE ENGINE ROTATION SPEED

LIGHT LOAD TRAVELING MODE ENGINE ROTATION SPEED

HEAVY LOAD TRAVELING MODE EINGINE ROTATION SPEED

**Fig. 2**

```
                    ┌─────────┐
                    │  START  │
                    └─────────┘
                         │
                         ▼
                    ╱ S1  ╲
              ╱TRAVEL OPERATION╲    NO
             ╱  IS DETECTED?    ╲──────────┐
              ╲                 ╱          │
               ╲               ╱           │
                ╲             ╱            │
                  │ YES                    │
                  │         S3             ▼    S2
     ┌────────────────────────────┐   ┌──────────────────┐
     │ SET THRESHOLD A WHEN PUMP   │   │ NORMAL OPERATION │
     │ LOAD PRESSURE INCREASES     │   │      MODE        │
     │ AND SET THRESHOLD B, WHICH  │   └──────────────────┘
     │ IS LOWER THAN THRESHOLD A,  │
     │ WHEN PUMP LOAD PRESSURE     │
     │       DECREASES             │
     └────────────────────────────┘
                  │
                  ▼
               ╱ S4 ╲
          ╱ PUMP LOAD ╲
       ╱PRESSURE IS HIGHER THAN╲   NO
      ╱     THRESHOLD           ╲────────┐
       ╲     A OR B?           ╱         │
          ╲                  ╱           │
             ╲             ╱             │
                │ YES   S6               ▼       S5
     ┌──────────────────┐      ┌──────────────────┐
     │   HEAVY LOAD      │      │   LIGHT LOAD      │
     │  TRAVELING MODE   │      │  TRAVELING MODE   │
     └──────────────────┘      └──────────────────┘
                │                       │
                ▼                       ▼
```

**Fig. 3**

**Fig. 4**

**Fig. 5**

5m,5a,5b,5c WORKING HYDRAULIC
PRESSURE ACTUATOR

Fig. 6

HYDRAULIC
CIRCUIT — 10

12 ENGINE

ROTATION
SPEED SENSOR — 13

14 — FUEL
INJECTOR

HYDRAULIC PRESSURE
PUMP

16 — REGULATOR

11

SWASH ANGLE
SENSOR — 17

PUMP PRESSURE
SENSOR — 18

16s

OPERATING
TOOL — 20

ENGINE
CONTROLLER

MACHINE
CONTROLLER

DIAL ENGINE
GOVERNOR

15

19

21

22 CONTROLLER

7 ENGINE AND
PUMP CONTROLLER

**EP 3 066 267 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007255414 A
- EP 1947316 A1
- JP 2009074406 A
- JP 2011157931 A
- GB 2417793 A

**20**